# EUROPEAN PATENT SPECIFICATION

(11) **EP 2 423 000 B1**
(45) Date of publication and mention of the grant of the patent: **25.02.2015**
(21) Application number: 10766817.0
(22) Date of filing: 16.04.2010
(51) Int. Cl.: B60C 5/14, B29C 33/04, B29D 30/08, C08K 5/00, C08L 21/00, C08L 29/04

(54) **PNEUMATIC TIRE AND METHOD OF MANUFACTURING SAME**
LUFTREIFEN UND HERSTELLUNGSVERFAHREN DAFÜR
PNEU ET PROCEDE DE FABRICATION CORRESPONDANT

(30) Priority: 24.04.2009 JP 2009106645
(43) Date of publication of application: 29.02.2012
(73) Proprietor: Bridgestone Corporation, Tokyo 104-8340 (JP)
(72) Inventor: NAKAGAWA, Daisuke, Kodaira-shi Tokyo 187-8531 (JP); NOHARA, Daisuke, Kodaira-shi Tokyo 187-8531 (JP); TAKAHASHI, Yuwa, Kodaira-shi Tokyo 187-8531 (JP)
(74) Representative: Oxley, Robin John George
(86) International application number: PCT/JP2010/002796
(87) International publication number: WO 2010/122755

(56) References cited:
- EP-A1- 2 036 743
- EP-A1- 2 045 102
- WO-A1-2008/096900
- JP-A- 2008 024 228
- JP-A- 2009 220 793

## Description

### TECHNICAL FIELD

The present invention relates to a pneumatic tire having an inner liner consists of a single or multiple film layers on an inner face of the pneumatic tire and a method of manufacturing the pneumatic tire. In particular, the present invention relates to the pneumatic tire and a method of manufacturing the pneumatic tire that eliminate the need of application of a mold release agent to the inner face at the time of manufacture using a bladder.

### BACKGROUND ART

In order to maintain a steady tire pressure by preventing air leak, a layer of the inner liner has been conventionally disposed on the inner face of the pneumatic tire. The layer of the inner liner is primarily composed of butyl-based rubber having low gas permeability, such as butyl rubber and halogenated butyl rubber. However, as the butyl-based rubber content of the inner liner increases, it degrades strength of unvulcanized rubber, which is likely to cause rubber cutting and boring of sheets. Especially if the inner liner has a thin gauge, it causes a problem to easily expose codes inside the tire in manufacturing thereof. Accordingly, the butyl-based rubber contained in the inner liner is automatically limited. When a rubber composition composed primarily of butyl-based rubber is used for the inner liner, it has been necessary to make a thickness of the inner liner about 1mm in order to retain gas barrier property as well as strength of the unvulcanized rubber. Therefore, a weight of the inner liner accounts for about 5% of the tire, which has been an obstacle to reduction in weights of the tire for the purpose of improvement in fuel consumption of vehicles.

In order to respond to a recent public request for energy saving, there have been suggested methods to make the inner liner having a thin gage for the purpose of reduction in the weights of the tire for the vehicles. For examples, there is suggested a method to use a nylon film layer or a vinylidene chloride layer for the inner liner, in place of butyl-based rubber conventionally used (for example, see Patent Document 1 and Patent Document 2). In addition, it is also suggested to use a film composed of a blend of thermoplastic resin, such as polyamide resin, polyester resin and the like, and elastomer for the inner liner (for example, see Patent Document 3).

The methods to use the above films may contribute to reduction in the weights of the tire, to some extent. However, since the matrix of the film is a crystalline resin material, the above methods have disadvantages that, in addition to complication of tire manufacturing process, anti-crack property and flex fatigue resistance especially at a low temperature, 5 degrees Celsius or below, are inferior to those of the layer made of the rubber composition having usual butyl-based rubber blended therein.

An ethylene-vinyl alcohol copolymer (hereinafter, abbreviated to EVOH as necessary) is known for its excellent gas barrier property. Since a gas permeability rate of the EVOH is equal to or less than 1% of that of the rubber composition having butyl-based rubber blended therein used for the inner liner, EVOH, even only 50µm or less in thickness, achieves a great improvement in retaining inner pressure of the tire while reducing the weight of the tire. Accordingly, it is considered that use of the EVOH as the inner liner of the tire is effective for the purpose of improvement in the gas permeability of the pneumatic tire. As such, there is known pneumatic tires having the inner liner made of the EVOH, for example (for example, see Patent Document 4).

However, despite the great effect in improvement in retaining the inner pressure of the tire, the inner liner made of usual EVOH, with a greater elastic modulus in comparison to rubbers normally used for the tire, have been causing a fracture and a crack as bent and deformed. Therefore, when the inner liner made of the EVOH is used, retention of the inner pressure of the tire before used is dramatically improved, although used tire having been bent and deformed in their rolling motion have degraded retention of the inner pressure at times.

In order to solve such a problem, there is disclosed a method to use, for the inner liner, a resin composition composed of an ethylene-vinyl alcohol copolymer 60-99 wt %, containing ethylene 20-70 mol % and having a saponification degree of 85% or higher, and hydrophobic plasticizer 1-40 wt %, for example (for example, see Patent Document 5). However, flex resistance of such inner liner is not always satisfactory.

In general, vulcanizing and molding the pneumatic tire is carried out by setting an unvulcanized tire in mold and inflating the bladder inside the unvulcanized tire so as to press the unvulcanized tire against inner face of the mold. When a resin film is used for the inner liner, a mold release agent is usually applied to the inner face of the pneumatic tire before the vulcanizing and molding, in order to prevent air accumulation and film damage caused as the inner face of the tire cannot slip on the bladder.

### DOCUMENTS OF PRIOR ART

### PATENT DOCUMENTS

Patent Document 1: Japanese Patent Application Laid-Open No.1995-40702
Patent Document 2: Japanese Patent Application Laid-Open No.1995-81306
Patent Document 3: Japanese Patent Application Laid-Open No. 1998-26407
Patent Document 4: Japanese Patent Application Laid-Open No. 1994-40207
Patent Document 5: Japanese Patent Application Laid-Open No.2002-52904

Reference is also made to WO 2008/096900 which discloses a pneumatic tire omprising a light blocking protective layer on the air permeation preventive layer and to EP2036743, EP2045102 and JP2008-024228.

### SUMMARY OF INVENTION

### PROBLEMS TO BE SOLVED BY THE INVENTION

However, application of the mold release agent to the tire in vulcanizing and molding causes problems to complicate a manufacturing process and also to increase manufacturing cost.

Hence, it has been desired to provide the pneumatic tire according to claim 1 and a method of manufacturing the pneumatic tireaccording to claim 10 that prevent air accumulation and film damage even without application of the mold release agent to the inner face of the tire in vulcanizing and molding using the bladder.

### SOLUTION TO PROBLEM

An object of the preset invention is to advantageously solve the problems above. A pneumatic tire according to the present invention is set out in Claim 1. The pneumatic tire according to the present invention has an inner liner including a film layer on an inner face of the pneumatic tire, wherein the pneumatic tire is produced by a manufacturing method including a process to press an unvulcanized tire against a mold by use of a bladder without applying a mold release agent, and **characterized in that** the inner face of the pneumatic tire consists of the film layer, and a dynamic friction coefficient between the film layer and the bladder is 2.0 or less at 25 degrees Celsius. Here, the dynamic friction coefficient is measured in conformity with JIS K7125. According to such a pneumatic tire, since the dynamic friction coefficient between the bladder and the film layer, with which the bladder contacts in vulcanizing and molding the pneumatic tire, is 2.0 or less at 25 degrees Celsius, the bladder smoothly slips on the inner face of the pneumatic tire and thus prevents air accumulation and film damage, even without the mold release agent applied on the inner face (film layer) of the pneumatic tire in vulcanizing and molding. Therefore, the present invention can provide the pneumatic tire which enables to eliminate a process to apply the mold release agent to the inner face of the tire at the time of manufacture.

Here, according to the pneumatic tire of the present invention, the film layer includes a compound having a molecular weight of 1000 or less. It thus enhances fluidity of a film material being treated with film processing (film forming) and facilitates processing of the film layer. Such a compound is a lubricant, which is preferably fatty acid compounds, hydrocarbon resins, paraffin, aliphatic amid, aliphatic ester, fatty acid metal salt, or a mixture thereof. Blending the above lubricant, such as fatty acid compounds, hydrocarbon resins, paraffin, aliphatic amid, aliphatic ester, fatty acid metal salt, and the like, in the film layer further decreases the dynamic friction coefficient between the bladder and the film layer, thereby unfailingly prevents air accumulation and film damage. Preferably, the lubricant has the molecular weight of 100-900, as such a lubricant bleeds out a suitable amount (bleed amount).

According to the pneumatic tire of the present invention, the film layer preferably includes a thermoplastic resin film. The thermoplastic resin film, even if it is a thin film layer, has sufficient gas barrier property and enables reduction in weights of the pneumatic tire.

Here, the film layer has a multilayer structure. It is thus possible to separate layers with different required functions (barrier property, protection performance and the like) to obtain a laminate of the layers having multiple functions.

In particular, it is possible to provide a laminate of protection layer/barrier layer/protection layer, for example.

According to one embodiment of the pneumatic tire of the present invention, oxygen permeability of the film layer is 3.0x10⁻¹²cm³• cm/cm² • sec • cmHg or less at 20 degrees Celsius and 65% RH. The film layer with such oxygen permeability sufficiently enhances gas barrier property of the inner liner, which enables to provide the pneumatic tire having excellent retention of an inner pressure.

According to one embodiment of the pneumatic tire of the present invention, the film layer includes a layer made of a modified ethylene-vinyl alcohol copolymer derived from an ethylene-vinyl alcohol copolymer 100 parts by mass including ethylene 25-50 mol % by reaction with an epoxy compound 1-50 parts by mass. The ethylene-vinyl alcohol copolymer has excellent gas barrier property and, when modified with the epoxy compounds, becomes capable of dramatically reducing elastic modulus of the ethylene-vinyl alcohol copolymer. Hence, it may improve resistance to fractures and cracks as bent, and thus provide the pneumatic tire having excellent retention of the inner pressure both when the pneumatic tire is brand new and after run.

According to one embodiment of the pneumatic tire of the present invention, the film layer includes a layer made of a resin composition, in which soft resin or elastomer having Young's modulus 500 MPa or less at 23 degrees Celsius is dispersed in a matrix of the modified ethylene-vinyl alcohol copolymer derived from the ethylene-vinyl alcohol copolymer 100 parts by mass including ethylene 25-50 mol % by reaction with the epoxy compound 1-50 parts by mass, and the resin composition contains soft resin or elastomer 10-80 mass %. It is possible to reduce the elastic modules of the film layer by including the layer made of the resin composition, in which soft resin or elastomer having Young's modulus 500 MPa or less is dispersed, and to improve flex resistance of the pneumatic tire as a result.

According to one embodiment of the pneumatic tire of the present invention, the film layer is preferably crosslinked. A crosslinked film layer can prevent the film layer from being significantly deformed and losing evenness in vulcanizing the pneumatic tire. Thus, it is possible to provide the pneumatic tire having the inner liner with excellent gas barrier property, flex resistance and fatigue resistance.

According to the pneumatic tire of the present invention, a surface of the film layer is formed of a thermoplastic urethane elastomer layer. Because the film layer has a resin film layer and an auxiliary layer, using the auxiliary layer made of thermoplastic urethane elastomer on the surface of the film layer enables to provide the pneumatic tire including the inner liner with excellent flex resistance. In addition, thermoplastic urethane elastomer has another advantage that it is easier to add the lubricant to it than to a resin film.

According to one embodiment of the pneumatic tire of the present invention, the inner liner is a laminate of the film layer and a rubbery elastic layer, which is composed of butyl rubber or halogenated butyl rubber. Since butyl rubber and halogenated butyl rubber have low air permeability, the rubbery elastic layer made of either of them can improve retention of the inner pressure of the pneumatic tire. In addition, it facilitates disposition of the inner liner on the inner face of the tire.

Here, the film layer and the rubbery elastic layer are preferably adhered to each other via an adhesive layer made of an adhesive composition. Thereby, it is possible to unfailingly prevent delamination of the film layer and the rubbery elastic layer.

The method of manufacturing a pneumatic tire of the present invention includes a process to set an unvulcanized tire, having an inner liner including a film layer disposed on an inner face of the pneumatic tire, in molds, a process to set a bladder inside the unvulcanized tire and a process to press the unvulcanized tire against the molds via the inner liner by inflating a bladder for vulcanizing and molding the unvulcanized tire, and is **characterized in that** the inner face of the unvulcanized tire consists of the film layer, a dynamic friction coefficient between the film layer and the bladder is 2.0 or less at 25 degrees Celsius, and a mold release agent is not used in vulcanizing and molding. Such a method of manufacturing the pneumatic tire can eliminate the necessity of application of the mold release agent to the inner face of the tire at the time of manufacturing, without causing air accumulation and film damage in vulcanizing and molding.

Here, according to the method of manufacturing a pneumatic tire of the present invention, the film layer includes a compound with a molecular weight of 1000 or less. Blending such a compound with a molecular weight of 1000 or less in the film layer enhances fluidity of a film material being treated with film processing (film forming) and thus facilitates processing of the film layer. The compound is preferably a lubricant, which is preferably fatty acid compounds, hydrocarbon resins, paraffin, aliphatic amid, aliphatic ester, fatty acid metal salt, or a mixture thereof. Blending the above lubricant, such as fatty acid compounds, hydrocarbon resins, paraffin, aliphatic amid, aliphatic ester, fatty acid metal salt, in the film layer further reduces a dynamic friction coefficient between a bladder and the film layer and enables to provide a method of manufacturing the pneumatic tire capable of unfailingly preventing air accumulation and film damage. Preferably, the lubricant has the molecular weight of 100-900, as such a lubricant bleeds out a suitable amount (bleed amount).

According to the method of manufacturing the pneumatic tire of the present invention, the film layer preferably includes a thermoplastic resin film. The thermoplastic resin film, even if it is a thin film layer, has sufficient gas barrier property and thus enables to provide a method of manufacturing lightweight pneumatic tire.

### EFFECT OF THE INVENTION

According to the pneumatic tire of the present invention, it is possible to provide the pneumatic tire which prevents air accumulation and film damage even without application of the mold release agent to the inner face of the tire in vulcanizing and molding by use of the bladder.

In addition, according to the method of manufacturing the pneumatic tire of the present invention, it is possible to provide the method of manufacturing the pneumatic tire that prevents air accumulation and film damage and eliminates a process to apply the mold release agent to the inner face of the pneumatic tire.

### BRIEF DESCRIPTION OF DRAWINGS

FIG 1 is a diagram illustrating a partial cross-section view of a pneumatic tire according to one embodiment of the present invention; and
FIG 2 shows diagrams illustrating an exemplary method for manufacturing the pneumatic tire according to the present invention: FIG. 2(a) shows placement of an unvulcanized tire in a mold; FIG 2(b) shows placement of a bladder inside the unvulcanized tire; FIG. 2(c) shows vulcanizing and molding of the tire; and FIG. 2(d) shows removal of a vulcanized tire as a finished product.

### DESCRIPTION OF EMBODIMENT

The following is detailed descriptions of a pneumatic tire and a method of manufacturing the pneumatic tire according to the present invention. The pneumatic tire according to the present invention is manufactured by the method including a process to press an unvulcanized tire against molds with bladder without applying a mold release agent, and a dynamic friction coefficient between a film layer of the tire and the bladder at 25 degrees Celsius is 2.0 or less.

### <Film layer>

The film layer may be a film or a sheet made of materials having a dynamic friction coefficient 2.0 or lower at 25 degrees Celsius with a bladder, which will be described in detail below. Such materials are, for example, polyamide resin, polyvinylidene chloride resin, polyester resin, ethylene-vinyl alcohol copolymer resin or the like. Above all, a resin film having oxygen permeability 3.0x10⁻¹²cm³ • cm/cm² • sec • cmHg or less, that is, a film made of ethylene-vinyl alcohol copolymer resin, for example, may be preferably used for the film layer. In light of reduction in weights of the pneumatic tire, a thickness of the film layer is preferably 0.1-100 µm. The film and the sheet may be produced by extrusion molding, for example.

In addition, in order to reduce the dynamic friction coefficient between the film layer and the bladder, the film layer is formed of the resin film blended with a compound having a molecular weight of 1000 or less, preferably 100-900, such as fatty acid compounds, hydrocarbon resins such as polyethylene wax, paraffin such as paraffin wax, aliphatic amid such as stearic acid amide or oleic amide, aliphatic ester such as butyl stearate, or fatty acid metal salt such as zinc salt of stearic acid, as a lubricant.

Here, the ethylene-vinyl alcohol copolymer needs to contain ethylene 25-50 mol %. In order to obtain excellent flex resistance and fatigue resistance, a minimum content of ethylene is preferably 30 mol % or more, and more preferably 35 mol % or more. In addition, in order to obtain excellent gas barrier property, a maximum content of ethylene is preferably 48 mol % or less, and more preferably 45 mol % or less. If the content of ethylene is less than 25 mol %, it may possibly deteriorate flex resistance, fatigue resistance and melt formability. Meanwhile, if the content of ethylene is more than 50 mol %, it may inhibit desired gas barrier property.

A saponification degree of the ethylene-vinyl alcohol copolymer is preferably 90% or higher, more preferably 95% or higher, further preferably 98% or higher, and most preferably 99% or higher. If the saponification degree is less than 90%, it may cause insufficiency of gas barrier property and thermal stability in forming the inner liner.

The ethylene-vinyl alcohol copolymer has a melt flow rate (MFR) of preferably 0.1-30 g/10 min, more preferably 0.3-25 g/10 min, at 190 degrees Celsius and under a load of 2160 g. For the ethylene-vinyl alcohol copolymer with a melting point around or over 190 degrees Celsius, MFR is measured at the temperature of the melting point or higher under the load of 2160g. A preferred ethylene-vinyl alcohol copolymer has a value in the above ranges, the value is extrapolated to 190 degrees Celsius by plotting an inverse of an absolute temperature on a horizontal axis and a logarithm of MFR on a vertical axis in a semi-logarithmic graph.

In addition, as ethylene-vinyl alcohol copolymer resin, suitably used may be a modified ethylene-vinyl alcohol copolymer, derived from the ethylene-vinyl alcohol copolymer by reaction with an epoxy compound, having soft resin or elastomer with Young's modules 500 MPa or less at 23 degrees Celsius dispersed therein. Such a resin composition enables improvement in flex resistance of the inner liner by reducing elastic modulus of the film layer, thus reducing likelihood of generation of fractures and cracks when the inner liner is bent.

Preferably, the above soft resin or elastomer has a functional group to react with a hydroxyl group. The soft resin or elastomer having the functional group to react with a hydroxyl group may be evenly dispersed in the modified ethylene-vinyl alcohol copolymer. Here, functional groups to react with the hydroxyl group may be a maleic anhydride residue, a hydroxyl group, a carboxyl group, an amino group and the like. The soft resin having the functional group to react with the hydroxyl group may be, in particular, a maleic anhydride modified hydrogenated styrene-ethylene-butadiene-styrene block copolymer, a maleic anhydride modified ultralow density polyethylene, and the like. In addition, it is preferred that an average particle diameter of the soft resin is 2 µm or smaller. If the average particle diameter of the soft resin is more than 2 µm, it may inhibit sufficient improvement in flex resistance of the film layer, possibly causing degradation of gas barrier property, which may lead to deterioration in retention of an inner pressure of the tire. The average particle diameter of the soft resin in the resin composition may be measured by, for example, microscopically observing a section of a frozen sample, which has been cut out with a microtome, by use of a transmission electron microscopy (TEM).

Here, a content rate of the soft resin or elastomer in the above resin composition is preferably within a range of 10-80 mass %. If the content rate is less than 10 mass %, flex resistance cannot be sufficiently improved, whereas the content rate more than 80 mass % may degrade gas barrier property.

The modified ethylene-vinyl alcohol copolymer can be obtained by, in particular, reacting an epoxy compound 1-50 parts by mass, preferably 2-40 parts by mass, and more preferably 5-35 parts by mass, with the ethylene-vinyl alcohol copolymer 100 parts by mass.

Here, a univalent epoxy compound is preferably used as the epoxy compound to react with the ethylene-vinyl alcohol copolymer. The epoxy compound having a valence of two or more develops a crosslinking reaction with the ethylene-vinyl alcohol copolymer and generates gel-like substances and foreign substances, which possibly deteriorate a quality of the inner liner. Among univalent epoxy compounds, glycidol and epoxypropane are particularly preferred, in terms of facilitation of manufacture, gas barrier property, flex resistance and fatigue resistance of the modified ethylene-vinyl alcohol copolymer.

Although not restrictive, a preferable method of producing the modified ethylene-vinyl alcohol copolymer is to react the ethylene-vinyl alcohol copolymer and epoxy compound with each other in solution. In particular, the modified ethylene-vinyl alcohol copolymer may be produced by adding the epoxy compound to ethylene-vinyl alcohol copolymer solution in the presence of an acid catalyst or an alkali catalyst, preferably in the presence of the acid catalyst, to react the ethylene-vinyl alcohol copolymer and epoxy compound. Here, reaction solvent may be aprotic polar solvent, such as dimethyl sulfoxide, dimethylformamide, dimethylacetamide, N-methylpyrrolidone and the like. In addition, the acid catalyst may be p-toluenesulfonic acid, methanesulfonic acid, trifluoromethane sulfonate, sulfonic acid, boron trifluoride or the like, whereas the alkali catalyst may be sodium hydroxide, potassium hydroxide, lithium hydroxide, sodium methoxide or the like. Preferably, a quantity of the catalyst is within a range of 0.0001-10 parts by mass to the ethylene-vinyl alcohol copolymer 100parts by mass.

Alternatively, the modified ethylene-vinyl alcohol copolymer may be produced by dissolving the ethylene-vinyl alcohol copolymer and the epoxy compound in the reaction solvent and then heat-treating the reaction solvent.

In order to obtain excellent flex resistance and fatigue resistance, the modified ethylene-vinyl alcohol copolymer, although not restrictive, has the melt flow rate (MFR) of 0.1-30 g/10 min at 190 degrees Celsius under the load of 2160 g, preferably 0.3-25 g/10 min, and more preferably 0.5-20 g/10 min. For the modified ethylene-vinyl alcohol copolymer having the melting point around or over 190 degrees Celsius, the MFR is measured at the temperature equal to or higher than the melting point under the load of 2160g. The preferred modified ethylene-vinyl alcohol copolymer has the value in the above ranges, the value is extrapolated to 190 degrees Celsius by plotting the inverse of the absolute temperature on the horizontal axis and the logarithm of MFR on the vertical axis in the semi-logarithmic graph.

Oxygen permeability of the film layer including the modified ethylene-vinyl alcohol copolymer, at 20 degrees Celsius and 65% RH, is preferably 3.0x10⁻¹²cm³ • cm/cm² • sec • cmHg or less, more preferably 1.0x10⁻¹²cm³ • cm/cm² • sec • cmHg or less, and further preferably 5.0x10⁻¹³cm³ • cm/cm² • sec • cmHgor less. If oxygen permeability at 20 degrees Celsius and 65% RH exceeds 3.0x10⁻¹²cm³ •cm/cm² • sec • cmHg, a thickness of the film layer must be increased to enhance retention of the inner pressure of the pneumatic tire when the film layer is used for the inner liner, which leads to increase in a weight of the pneumatic tire.

The film layer including the modified ethylene-vinyl alcohol copolymer may be obtained by forming the modified ethylene-vinyl alcohol copolymer into a film or a sheet in a melt formation process. In particular, extrusion molding such as, for example, T-die or inflation can be used to manufacture the film layer. A melting temperature in the melt formation process is preferably 150-270 degrees Celsius, depending on the melting point of the modified ethylene-vinyl alcohol copolymer.

Preferably, the modified ethylene-vinyl alcohol copolymer is crosslinked. If the modified ethylene-vinyl alcohol copolymer is not crosslinked and used for the inner liner, a layer made thereof may be severely deformed in the vulcanization process at the manufacture of the tire and prevents from maintaining the film even, thus possibly deteriorating gas barrier property, flex resistance and fatigue resistance of the inner liner.

Although not restrictive, a method to crosslink the modified ethylene-vinyl alcohol copolymer may be irradiation of energy beam. The energy beam may be ionizing radiations such as ultraviolet rays, electron beam, X-ray, α-ray or γ-ray. Above all, electron beam is particularly preferable.

Preferably, the electron beam is irradiated after formation of the modified ethylene-vinyl alcohol copolymer into a formed material, such as a film or a sheet, in the above methods. Here, an irradiation dose of the electron beam is preferably in a range of 10-60 Mrad, more preferably in a range of 20-50 Mrad. The irradiation dose of the electron beam less than 10 Mrad may hardly progress crosslinking, while accelerating deterioration of the formed material if the irradiation dose is more than 60 Mrad.

In addition, the film layer used for the pneumatic tire according to the present invention has a structure laminating the above resin film or sheet and an auxiliary layer.

Here, the auxiliary layer is preferably made of elastomer such as, for example, butyl rubber, diene elastomer or the like.

Diene elastomer may be preferably made of natural rubber or butadiene rubber. In terms of improvement in gas barrier property, however, butyl rubber is preferable, and halogenated butyl rubber is more preferable.

In addition, in order to prevent expansion of cracks generated on the auxiliary layer, it is preferable to use a mixture of butyl rubber and diene elastomer. Thereby, it is possible to maintain high retention of the inner pressure of the pneumatic tire in the case where a minimal crack is generated on the auxiliary layer.

Another preferable elastomer used for the auxiliary layer is thermoplastic urethane elastomer, as it may prevent generation and expansion of cracks on the auxiliary layer, as well as reducing a weight of the pneumatic tire as it allows for reduction in a thickness of the auxiliary layer. Here, if thermoplastic urethane elastomer is used for the auxiliary layer, it is further preferable to have the auxiliary layer made of thermoplastic urethane elastomer as a surface layer of the film layer. Thereby, it is possible to provide the pneumatic tire having the inner liner excellent in flex resistance. Thermoplastic urethane elastomer is also excellent in making it easier to add a lubricant than the resin film.

More preferably, the auxiliary layer is a multilayer consists of a layer made of thermoplastic urethane elastomer and a layer made of a mixture of butyl rubber and diene elastomer.

The auxiliary layer has oxygen permeability preferably 3.0x10⁻⁹cm³ • cm/cm² • sec • cmHg or less, and more preferably 1.0x10⁻⁹cm³ • cm/cm² • sec • cmHg or less, at 20 degrees Celsius and 65% RH. When having oxygen permeability of 3.0x10⁻⁹cm³ • cm/cm² • sec • cmHg or less at 20 degrees Celsius and 65% RH, the auxiliary layer also functions as a gas barrier layer. Therefore, it fully provides an effect to reinforce gas barrier property of the resin film, thus enabling to maintain high retention of the inner pressure of the pneumatic tire. Moreover, it enables to successfully retain the inner pressure in the event of cracks on the resin film. The auxiliary layer with low air permeability is made of butyl rubber or halogenated butyl rubber.

Further, in order to prevent generation and expansion of cracks, a tensile stress of the auxiliary layer in extension at 300% is preferably 10 MPa or less, more preferably 8 MPa or less, and further preferably 7 MPa or less. If the tensile stress of the auxiliary layer is more than 10MPa in extension at 300%, it may deteriorate flex resistance and fatigue resistance of the inner liner including the auxiliary layer.

Here, the resin film and the auxiliary layer may be adhered to one another via at least one adhesive layer. Having an OH group, the ethylene-vinyl alcohol copolymer used for the resin film may facilitate adhesion to the auxiliary layer. The adhesive used for the adhesive layer may be, for example, chlorinated rubber-isocyanate based adhesive.

Although not restrictive, other methods to produce the above film layer may be, for example: a method to melt and extrude elastomer and adhesive layer that form the auxiliary layer on a molded product (resin film) made of, for example, the film or the sheet of the modified ethylene-vinyl alcohol copolymer; a method to melt and extrude the modified ethylene-vinyl alcohol copolymer and the adhesive layer onto an elastomer base material forming the auxiliary layer; a method to co-extrude the modified ethylene-vinyl alcohol copolymer, the auxiliary layer and, if necessary, the adhesive layer; a method to adhere the molded product obtained from the modified ethylene-vinyl alcohol copolymer and the auxiliary layer with the adhesive layer; and a method, in molding the tire, to adhere the molded product obtained from the modified ethylene-vinyl alcohol copolymer, the auxiliary layer and, if necessary, the adhesive layer on a drum.

When obtaining the film layer by laminating the resin film or sheet and the auxiliary layer, the resin film is preferably composed of the modified ethylene-vinyl alcohol copolymer and has a thickness of preferably 0.1 µm or more and 100 µm or less, more preferably 1-40 µm, and further preferably 5-30 µm. A total thickness of the auxiliary layer is preferably 50-2000 µm, more preferably 100-1040 µm, and further preferably 300-800 µm.

If the thickness of the resin film is more than 100 µm, it has less effect in weight reduction of the tire in comparison to the inner liner using butyl rubber or halogenated butyl rubber for the gas barrier layer and degrades flex resistance and fatigue resistance of the resin film, which likely to lead to fractions and cracks as a resin film layer is bent and deformed. Moreover, since cracks generated on such a resin film are likely to expand, retention of the inner pressure may be reduced when vehicles wearing the tire including the resin film layer run. Meanwhile, if the thickness of the resin film is less than 0.1 µm, it is not possible to retain sufficient gas barrier property.

If the total thickness of the auxiliary layer is more than 2000 µm, it increases the weight of the pneumatic tire. In contrast, if the total thickness is less than 50 µm, flex resistance and fatigue resistance of the inner liner are degraded, which likely to lead to generation of fractures and cracks, and to expand the cracks, thus possibly deteriorating retention of the inner pressure of the tire including such an inner liner. Moreover, in terms of manufacture of the tire, it is difficult to make the auxiliary layer under the tire belt less than 50 µm in total thickness.

### <Inner liner>

The inner liner used for the pneumatic tire according to the present invention may consist of only the above film layer or, alternatively, of laminate of the film layer and a rubbery elastic layer made of the rubbery elastic body. The inner liner is **characterized in that**, when disposed on an inner face of the pneumatic tire, the above film layer is positioned on the inner face of the pneumatic tire (a plane to contact with the bladder in vulcanizing and molding the tire).

Here, the above rubbery elastic layer preferably includes butyl rubber or halogenated butyl rubber as a rubber constituent. Halogenated butyl rubber may be chlorinated butyl rubber, brominated butyl rubber, or modified rubber thereof. There is halogenated butyl rubber commercially available such as, for example, "Enjay Butyl HT10-66" (registered trademark), chlorinated butyl rubber produced by Enjay Chemical Corporation, and "Bromobutyl 2255" (registered trademark) and "Bromobutyl 2244" (registered trademark), brominated butyl rubber produced by JSR Corporation. Chlorinated or brominated modified rubber may be, for example, "Expro50" (registered trademark) produced by Exxon Mobil Corporation.

In order to improve resistance to air permeability, a content rate of butyl rubber and/or halogenated butyl rubber in the rubber constituent in the rubbery elastic layer is preferably 50 mass % or more, and more preferably 70-100 mass %. Here, the above rubber constituent may be not only butyl rubber or halogenated butyl rubber but also diene rubber or epichlorohydrin rubber. It is possible to use the above rubber constituent singly or in combination of two or more.

The above diene rubber may be, in particular, natural rubber (NR), isoprene rubber (IR), cis-1,4-polybutadiene (BR), syndiotactic-1,2-polybutadiene (1,2BR), styrene-butadiene copolymer rubber (SBR), acrylonitrile-butadiene rubber (NBR), chloroprene rubber (CR) or the like. It is possible to use the above diene rubber singly or in combination of two or more.

For the above rubbery elastic layer, it is possible to optionally dispense, in addition to the above rubber constituents, a compounding agent, usually used in a rubber industry, such as, for example, reinforcing filler, softener, antioxidant, vulcanizing agent, vulcanization accelerator for rubber, antiscorching agent, zinc oxide, stearic acid or the like, as necessary. Those compounding agents are commercially available and can be used suitably.

According to the laminate of the present invention, the thickness of the film layer is preferably 200 µm or less, whereas the thickness of the rubbery elastic layer is preferably 200 µm or more. Here, the thickness of the film layer is preferably about 1 µm at minimum, more preferably in a range of 10-150 µm, and further preferably in a range of 20-100 µm. If the thickness of the film layer exceeds 200 µm, it degrades flex resistance and fatigue resistance of the laminate used for the inner liner, which is likely to lead to generation of fractures and cracks as the tire is bent and deformed while rolling. In contrast, if the thickness of the film layer is less than 1 µm, it may unable to retain sufficient gas barrier property. In addition, if the thickness of the rubbery elastic layer is less than 200 µm, it fails to fully exert an effect of reinforcement and increases the likelihood of expansion of fractures and cracks on the film layer, thus making it difficult to prevent disadvantages such as large fractures and cracks.

Here, the film layer and the rubbery elastic layer may be adhered to one another via the adhesive layer composed of an adhesive composition. A thickness of the adhesive layer is preferably in a range of 5-100 µm. Less than 5 µm in thickness, the adhesive layer may cause insufficient adhesion, whereas it reduces benefits from reduction of the tire weight and cost if the thickness is more than 100 µm.

The adhesive composition may be chlorosulfonated polyethylene, butyl rubber, halogenated butyl rubber, diene rubber or the like. Above all, chlorosulfonated polyethylene, and butyl rubber and/or halogenated butyl rubber are particularly preferable.

When disposed on the inner face of the tire, the inner liner is likely to generate fractures and cracks around a side part of the tire, which is severely deformed as bent. Therefore, if the inner liner has a thick auxiliary layer at a part corresponding to a part inside the side part of the tire, it may enhance retention of the inner pressure of the tire having the inner liner therein while reducing the weight of the inner liner.

### <Pneumatic tire>

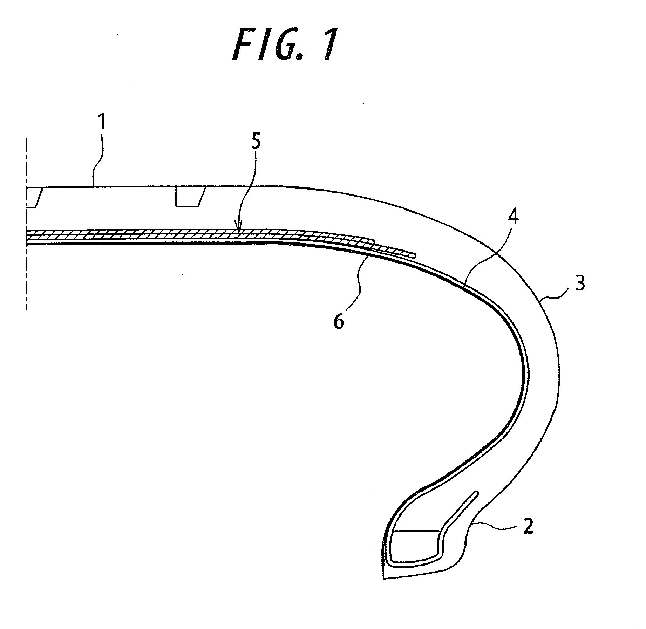

As a section view of a half portion of the tire is shown in FIG. 1, for example, the pneumatic tire according to the present invention has a tread 1, a pair of beads 2, a pair of side walls 3 extending between the tread 1 and the each of beads 2, a carcass 4 in a troidal shape extending between the pair of beads 2 to reinforce each of them, a belt 5 consists of two belt layers disposed on an outer side in the tire radius direction of the crown of the carcass 4, and an inner liner 6 disposed on an inner side of the carcass 4. The inner face of the pneumatic tire consists of the above film layer.

Here, in the pneumatic tire, a total thickness of a part of the auxiliary layer, which is in an area from an end of the belt to the bead and having a width of at least 30 mm, is preferably at least 0.2 mm thicker than the auxiliary layer under the belt. This is because, since the area from the end of the belt to the bead is most severely distorted and thus likely to generate cracks, it is effective to thicken the auxiliary layer in this particular area in order to improve durability of the area of the tire.

Such a pneumatic tire may be manufactured in the following method, for example.

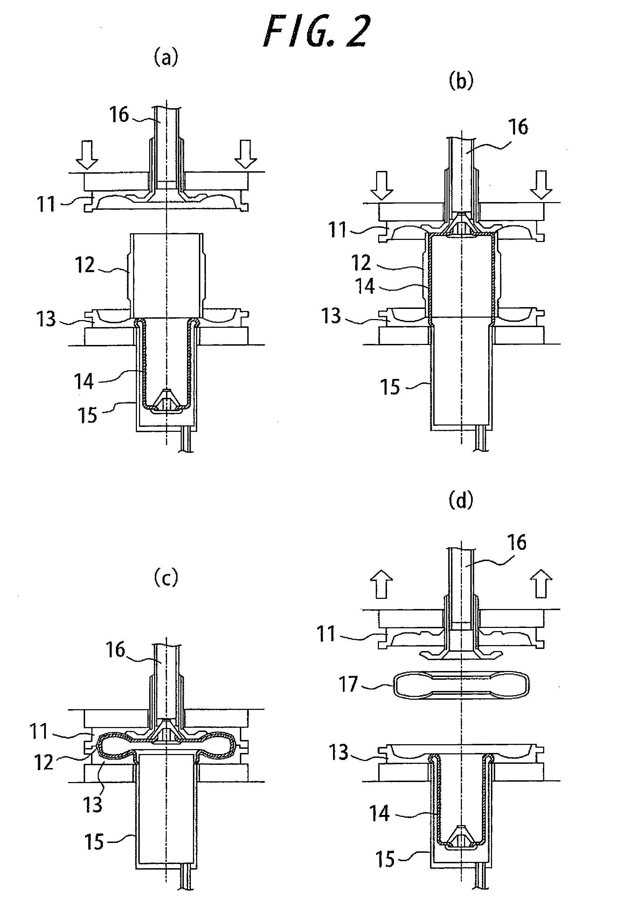

First, an unvulcanized tire 12 having an inner liner on an innermost face thereof and produced by a usual method is placed between an upper mold 11 and a lower mold 13, without application of the mold release agent, such that an axial direction of the tire becomes vertical (see FIG. 2(a)). Here, a rod 16 is provided on the upper mold 11, whereas a cylinder 15 having a bladder 14 is provided under the lower mold 13. The bladder 14 may be one disclosed in Japanese Patent Application Laid-Open No.2008-179676. In particular, the bladder 14 is a rubber composition composed of, for example, butyl rubber 95 parts by mass, chloroprene rubber 5 parts by mass, carbon black 48 parts by mass, resin 5.5 parts by mass, castor oil 8 parts by mass, and zinc oxide 5 parts by mass, vulcanized and molded in an ordinary manner and has a dynamic friction coefficient with the film layer of the above inner liner is 2.0 or less at 25 degrees Celsius.

Next, the upper mold 11 is pushed down and, simultaneously, the bladder 14 is lifted up as supplied with heated fluid such as, for example, steam from a lower part of the cylinder 15, thereby the bladder 14 is disposed inside the unvulcanized tire 12 (inside of the film layer) (see FIG. 2(b)).

Then, the upper mold 11 is pushed further down by the rod 16 to firmly contact with the lower mold 13. The unvulcanized tire 12 is pressed against the molds by the bladder 14 inflated by supply of the steam (see FIG. 2(c)). At this time, since the dynamic friction coefficient between the bladder 14 and the film layer on the inner face of the unvulcanized tire 12 is small, it does not cause air accumulation or film damage even without application of the mold release agent.

Then, the unvulcanized tire 12 is vulcanized and molded as pressed against the molds by the bladder 14 and heated by the steam supplied to the bladder 14, thereby a vulcanized tire 17 is produced (see FIG. 2(d)).

### Examples

Although the present invention will be described in further detail using examples below, the present invention is not limited to the examples.

### <Manufacturing example 1: Synthesis of the modified ethylene-vinyl alcohol copolymer>

The ethylene-vinyl alcohol copolymer 2 parts by mass (MFR: 5.5 g/10 min at 190 degrees Celsius under a load of 21.18 N, ethylene content 44 mol %, a saponification degree 99.9%) and N-methyl-2- pyrrolidone 8 parts by mass were fed to a pressurized reaction vessel, which was then heated and stirred at 120 degrees Celsius for 2 hours, in order to completely dissolve the ethylene-vinyl alcohol copolymer. As an epoxy compound, epoxy propane 0.4 parts by mass was added thereto and then heated at 160 degrees Celsius for 4 hours. After heating, deposited in distilled water 100 parts by mass, and N-methyl-2-pyrrolidone and unreacted epoxy propane were thoroughly washed in a large amount of distilled water, thereby the modified ethylene-vinyl alcohol copolymer was obtained. Moreover, the modified ethylene-vinyl alcohol copolymer obtained was crushed into particles of 2mm in diameter by a crusher and once again thoroughly washed in a large amount of the distilled water. The washed particles were vacuum-dried at room temperature for 8 hours and then melt by a twin screw extruder at 200 degrees Celsius, so as to form pellets.

An amount to contain ethylene and the saponification degree of the above ethylene-vinyl alcohol copolymer were calculated from a spectrum obtained by 1H-NMR measurement ("JNM-GX-500 Type" manufactured by JEOL Ltd.) using deuterated dimethyl sulfoxide as solvent. In addition, the melt flow rate (MFR) of the above ethylene-vinyl alcohol copolymer was obtained by filling a sample in a cylinder having an internal diameter 9.55 mm and a length 162 mm of Melt Indexer L244 (manufactured by Takara Kogyo K.K.), melting the sample at 190 degrees Celsius, evenly applying a load with a plunger having a diameter 9.48 mm and weighting 2160 g, and measuring an amount of the resin (g/10min) extruded from an orifice formed in center of the cylinder and having the diameter 2.1 mm, for a unit time. However, for the ethylene-vinyl alcohol copolymer with the melting point around or over 190 degrees Celsius, the melt flow rate (MFR) was measured at a plurality of temperatures of the melting point or higher under the load of 2160g and defined as a value extrapolated from 190 degrees Celsius by plotting the inverse of the absolute temperature on the horizontal axis and the logarithm of MFR on the vertical axis in the semi-logarithmic graph.

### <Manufacturing example 2: Production of three-layered film>

A three-layered film (TPU layer/modified EVOH layer (resin film)/TPU layer, the lubricant was mixed in the TPU layer) was produced from the above modified EVOH obtained in the above Manufacturing example 1 and thermoplastic polyurethane (TPU), "Kuramiron 3190" produced by Kuraray, Co., Ltd., by use of a two-type three-layered co-extruder, under a co-extrusion condition below. A thickness of both of the TPU layer and the modified EVOH layer was 20 µm.

Temperature of extrusion of each resin: C1/C2/C3/die=170/170/220/2 degrees Celsius

Specification of extruder for each resin:
Thermoplastic polyurethane: 25 mmφ extruder P25-18AC (manufactured by Osaka Seiki Kosaku K.K.)
Modified EVOH: 20 mmφ extruder, a laboratory machine ME type CO-EXT (manufactured by TOYO SEIKI Co., Ltd)
Specification of T-die, 500 mm in width, for two-type three-layered (manufactured by PLABOR Research Laboratory of Plastics Technology Co., Ltd)
Temperature of a cooling roll: 50 degrees Celsius
Winding speed: 4m/min

### <Manufacturing example 3: Production of unvulcanized rubbery elastic layer>

A rubber composition containing materials listed below was prepared, in order to manufacture an unvulcanized rubbery elastic sheet 500 µm in thickness.

### (Rubber composition)

### Natural rubber: 30 parts by mass

Brominated butyl rubber (Bromobutyl 2244 manufactured by JSR Corporation): 70 parts by mass
GPF carbon black (#55 manufactured by Asahi Carbon Co., Ltd.): 60 parts by mass SUNPAR 2280 (manufactured by Japan Sun Oil Company, Ltd.): 7 parts by mass Stearic acid (manufactured by ADEKA Corporation): 1 parts by mass
Vulcanization accelerator (NOCCELOR DM manufactured by Ouchi Shinko Chemical Industrial Co., Ltd.): 1.3 parts by mass
Zinc oxide (manufactured by Hakusuitech Ltd.): 3 parts by mass
Sulfur (manufactured by Karuizawa Refinery): 0.5 parts by mass

### <Manufacturing example 4: Production of unvulcanized rubbery elastic layer>

A rubber composition containing materials listed below was prepared, in order to manufacture the unvulcanized rubbery elastic sheet 500 µm in thickness.

### (Rubber composition)

### Natural rubber: 100 parts by mass

GPF carbon black (#55 manufactured by Asahi Carbon Co., Ltd.): 60 parts by mass SUNPAR 2280 (manufactured by Japan Sun Oil Company, Ltd.): 7 parts by mass Stearic acid (manufactured by ADEKA Corporation): 1 parts by mass
Vulcanization accelerator (NOCCELOR DM manufactured by Ouchi Shinko Chemical Industrial Co., Ltd.): 1.3 parts by mass
Zinc oxide (manufactured by Hakusuitech Ltd.): 3 parts by mass
Sulfur (manufactured by Karuizawa Refinery): 0.5 parts by mass

### <Manufacturing example 5: Preparation of adhesive composition-1 and coating fluid>

In order to prepare coating fluid, an adhesive composition containing materials listed below and kneaded in a usual manner, was added to toluene (δ value: 18.2 MPa^{1/2}) 1000 parts by mass, and then dispersed or melted.

### (Adhesive composition)

Brominated butyl rubber (Bromobutyl 2244 manufactured by JSR Corporation): 90 parts by mass
Chlorosulfonated polyethylene (Hypalon (registered trademark) manufactured by DuPont Dow Elastomers L.L.C.): 10 parts by mass
Carbon black (SEAST NB manufactured by Tokai Carbon Co., Ltd.): 10 parts by mass Phenol resin (PR-SC-400 manufactured by Sumitomo Bakelite Co., Ltd.): 20 parts by mass
Stearic acid (50S manufactured by New Japan Chemical Co., Ltd.): 1 parts by mass Zinc oxide (Hakusuitech manufactured by Hakusuitech Ltd.): 3 parts by mass P-dinitrosobenzen (Vulnoc DNB manufactured by Ouchi-Shinko Chemical Industrial Co., Ltd.): 3 parts by mass
1,4-phenylenedimaleimide (Vulnoc PM manufactured by Ouchi-Shinko Chemical Industrial Co., Ltd.): 3 parts by mass
Vulcanization accelerator (NOCCELOR ZTC manufactured by Ouchi Shinko Chemical Industrial Co., Ltd.): 1 parts by mass
Vulcanization accelerator (NOCCELOR DM manufactured by Ouchi Shinko Chemical Industrial Co., Ltd.): 0.5 parts by mass
Vulcanization accelerator (NOCCELOR D manufactured by Ouchi Shinko Chemical Industrial Co., Ltd.): 1 parts by mass
Sulfur ("Kinka" sulfur fine powder manufactured by Tsurumi Chemical Industry Co., Ltd.): 1.5 parts by mass

### <Manufacturing example 6: Preparation of adhesive composition-2 and coating fluid>

In order to prepare coating fluid, the adhesive composition containing materials listed below and kneaded in the usual manner, was added to toluene (δ value: 18.2 MPa^{1/2}) 1000 parts by mass, and then dispersed or melted.

### (Adhesive composition)

Brominated butyl rubber (Bromobutyl 2244 manufactured by JSR Corporation): 80 parts by mass
Chlorosulfonated polyethylene (Hypalon (registered trademark) manufactured by DuPont Dow Elastomers L.L.C.): 20 parts by mass
Carbon black (SEAST NB manufactured by Tokai Carbon Co., Ltd.): 10 parts by mass Phenol resin (PR-SC-400 manufactured by Sumitomo Bakelite Co., Ltd.): 20 parts by mass
Stearic acid (50S manufactured by New Japan Chemical Co., Ltd.): 1 parts by mass Zinc oxide (Hakusuitech manufactured by Hakusuitech Ltd.): 6 parts by mass P-dinitrosobenzen (Vulnoc DNB manufactured by Ouchi-Shinko Chemical Industrial Co., Ltd.): 6 parts by mass
1,4-phenylenedimaleimide (Vulnoc PM manufactured by Ouchi-Shinko Chemical Industrial Co., Ltd.): 6 parts by mass
Vulcanization accelerator (NOCCELOR ZTC manufactured by Ouchi Shinko Chemical Industrial Co., Ltd.): 1 parts by mass
Vulcanization accelerator (NOCCELOR DM manufactured by Ouchi Shinko Chemical Industrial Co., Ltd.): 0.5 parts by mass
Vulcanization accelerator (NOCCELOR D manufactured by Ouchi Shinko Chemical Industrial Co., Ltd.): 1 parts by mass
Sulfur ("Kinka" sulfur fine powder manufactured by Tsurumi Chemical Industry Co., Ltd.): 1.5 parts by mass

### <Manufacturing example 7: Preparation of adhesive composition-3 and coating fluid>

In order to prepare coating fluid, the adhesive composition containing materials listed below and kneaded in the usual manner, was added to toluene (δ value: 18.2 MPa^{1/2}) 1000 parts by mass, and then dispersed or melted.

### (Adhesive composition)

Brominated butyl rubber (Bromobutyl 2244 manufactured by JSR Corporation): 70 parts by mass
Chlorosulfonated polyethylene (Hypalon (registered trademark) manufactured by DuPont Dow Elastomers L.L.C.): 30 parts by mass
Carbon black (SEAST NB manufactured by Tokai Carbon Co., Ltd.): 10 parts by mass Phenol resin (PR-SC-400 manufactured by Sumitomo Bakelite Co., Ltd.): 20 parts by mass
Stearic acid (50S manufactured by New Japan Chemical Co., Ltd.): 1 parts by mass Zinc oxide (Hakusuitech manufactured by Hakusuitech Ltd.): 6 parts by mass P-dinitrosobenzen (Vulnoc DNB manufactured by Ouchi-Shinko Chemical Industrial Co., Ltd.): 8 parts by mass
1,4-phenylenedimaleimide (Vulnoc PM manufactured by Ouchi-Shinko Chemical Industrial Co., Ltd.): 8 parts by mass
Vulcanization accelerator (NOCCELOR ZTC manufactured by Ouchi Shinko Chemical Industrial Co., Ltd.): 1 parts by mass
Vulcanization accelerator (NOCCELOR DM manufactured by Ouchi Shinko Chemical Industrial Co., Ltd.): 0.5 parts by mass
Vulcanization accelerator (NOCCELOR D manufactured by Ouchi Shinko Chemical Industrial Co., Ltd.): 1 parts by mass
Sulfur ("Kinka" sulfur fine powder manufactured by Tsurumi Chemical Industry Co., Ltd.): 1.5 parts by mass

### <Example 1>

The three-layered film (TPU/modified EVOH/TPU, stearic acid as the lubricant was mixed in the TPU layer) produced in Manufacturing example 2 was irradiated with the electron beam by an electron beam irradiator "Curetoron for production EBC200-100" manufactured by NHV Corporation at an accelerating voltage of 200 kV and irradiation energy of 30 Mrad for crosslinking treatment. The coating fluid obtained in Manufacturing example 5 was applied to one plane of a thermoplastic multilayer resin film obtained, which was then dried, and an unvulcanized rubbery elastic sheet 500 µm in thickness obtained in Manufacturing example 3 was laminated thereto. Thereby, the inner liner was obtained. Using this inner liner, a pneumatic tire for vehicles (195/65R15) was manufactured in the same manner as a usual manufacturing method, except for not using the mold release agent in vulcanizing as described above. Then, oxygen permeability of the three-layered film, the dynamic friction coefficient of the inner liner and the condition of the inner face of the vulcanized tire for the pneumatic tire were measured and evaluated in the following manners. Results are shown in Table 1.

### (Oxygen permeability)

The three-layered film produced was let stand in a humidity controlled room at 20 degrees Celsius and 65 % RH for 5 days. Using two films thus obtained, whose humidity was controlled, oxygen permeability was measured by use of MOCON OX-TRAN 2/20 Type (registered trademark) manufactured by MOCON, Inc., under the condition at 20 degrees Celsius and 65% RH, in conformity with JIS K7126 (isopiestic method).

### (Measurement of dynamic friction coefficient)

The dynamic friction coefficient between the inner liner and the bladder formed of a vulcanized and molded rubber composition, in which butyl rubber 95 parts by mass, chloroprene rubber 5 parts by mass, carbon black 48 parts by mass, resin 5.5 parts by mass, castor oil 8 parts by mass, and zinc oxide 5 parts by mass were mixed, was measured at 25 degrees Celsius, in conformity with JIS K7125.

### (Evaluation of condition of inner face of tire)

After vulcanizing and molding the pneumatic tire by use of the bladder, an appearance of the inner liner was visually observed to evaluate a condition of the film layer, such as damage and the like, based on the following criteria.
○: Good (The film layer in 1 out of 10 manufactured tires was lightly damaged but had no problem in durability.)
×: Bad (The film layer was damaged)

### <Examples 2-4>

The pneumatic tire for vehicles (195/65R15) was manufactured in the same manner as Example 1, except for adding the lubricant shown in Table 1 to the TPU layer. Then, the dynamic friction coefficient of the inner liner and the condition of the inner face of the vulcanized tire for the pneumatic tire were measured and evaluated in the same manner as Example 1. Results are shown in Table 1.

### <Comparative example 1>

The pneumatic tire for vehicles (195/65R15) was manufactured in the same manner as Example 1, except for using only the unvulcanized rubbery elastic sheet 500 µm in thickness obtained in Manufacturing example 3 as the inner liner, without using the three-layered film. Then, the dynamic friction coefficient of the inner liner and the condition of the inner face of the vulcanized tire for the pneumatic tire were measured and evaluated in the same manner as Example 1. Results are shown in Table 1.

### <Comparative example 2>

The pneumatic tire for vehicles (195/65R15) was manufactured in the same manner as Comparative example 1, except for using a mold release agent (mica powder manufactured by Matsumoto Yushi-Seiyaku Co., Ltd., diluted to 50 mass % in the water) in vulcanizing. Then, the dynamic friction coefficient of the inner liner and the condition of the inner face of the vulcanized tire for the pneumatic tire were measured and evaluated in the same manner as Example 1. Results are shown in Table 1.

### <Comparative example 3>

The three-layered film was produced in the same manner as Manufacturing example 2, except for not mixing the lubricant in the TPU layer. Then, the three-layered film was irradiated with the electron beam at the accelerating voltage of 200 kV and irradiation energy 30 Mrad for the crosslinking treatment. The coating fluid obtained in Manufacturing example 5 was applied to one plane of the thermoplastic multilayer resin film obtained, which was then dried, and the unvulcanized rubbery elastic sheet 500 µm in thickness obtained in Manufacturing example 3 was laminated thereto. Thereby, the inner liner was obtained. Using this inner liner, the pneumatic tire for vehicles (195/65R15) was manufactured in the same manner as Example 1, except for using the mold release agent (mica powder manufactured by Matsumoto Yushi-Seiyaku Co., Ltd., diluted to 50 mass % in the water) in vulcanizing. Then, the dynamic friction coefficient of the inner liner and the condition of the inner face of the vulcanized tire for the pneumatic tire were measured and evaluated in the same manner as Example 1. Results are shown in Table 2.

### <Examples 5-8>

The pneumatic tire for vehicles (195/65R15) was manufactured in the same manner as Example 1, except for adding the lubricant shown in Table 2 to the TPU layer. Then, the dynamic friction coefficient of the inner liner and the condition of the inner face of the vulcanized tire for the pneumatic tire were measured and evaluated in the same manner as Example 1. Results are shown in Table 2.

### <Example 9, Comparative example 4>

The pneumatic tire for vehicles (195/65R15) was manufactured in the same manner as Example 1, except for adding the lubricant shown in Table 3 to the TPU layer. Then, the dynamic friction coefficient of the inner liner and the condition of the inner face of the vulcanized tire for the pneumatic tire were measured and evaluated in the same manner as Example 1. Results are shown in Table 3.

**[Table 1]**

| | Comparative Example 1 | Comparative Example 2 | Example 1 | Example 2 | Example 3 | Example 4 |
|---|---|---|---|---|---|---|
| Three-layered Film | No | No | Yes | Yes | Yes | Yes |
| Application of Mold Release Agent | No | Yes | No | No | No | No |
| Added Lubricant (TPU Layer) | - | - | Stearic Acid (Manufactured by New Japan Chemical Co., Ltd.) | Zinc Stearate (Manufactured by Junsei Chemical Co., Ltd.) | n-butyl Stearate (Manufactured by Kawaken Fine Chemicals Co., Ltd.) | Paraffin Wax (Manufactured by Showa Chemical Co., Ltd.) |
| Molecular Weight of Lubricant | - | - | 285 | 632 | 342 | 500-800 |
| Oxygen Permeability of Three-layered Film [cm³ • cm/cm² • sec • cmHg] | - | - | 10.0x10⁻¹³ | 10.0x10⁻¹³ | 10.0x10⁻¹³ | 10.0x10⁻¹³ |
| Dynamic Friction Coefficient [-] | 3 | 3 | 1.5 | 1 | 1.3 | 1.1 |
| Condition of Inner Face of Vulcanized Tire | × | ○ | ○ | ○ | ○ | ○ |

**[Table 2]**

| | Comparative Example 3 | Example 5 | Example 6 | Example 7 | Example 8 |
|---|---|---|---|---|---|
| Three-layered Film | Yes | Yes | Yes | Yes | Yes |
| Application of Mold Release Agent | Yes | No | No | No | No |
| Added Lubricant (TPU Layer) | - | Stearic acid amide (Manufactured by Nippon Fine Chemical Co., Ltd.) | Ethylenebis stearic acid amide (Manufactured by Nippon Kasei Chemical Co., Ltd.) | Stearyl Alcohol (Manufactured by New Japan Chemical Co., Ltd.) | 12-Hydroxystearic Acid (Manufactured by Ito Oil Chemicals Co., Ltd.) |
| Molecular Weight of Lubricant | - | 283 | 592 | 270 | 300 |
| Oxygen Permeability of Three-layered Film [cm³ •cm/cm² • sec • cmHg] | 10.0x10⁻¹³ | 10.0x10⁻¹³ | 10.0x10⁻¹³ | 10.0x10⁻¹³ | 10.0x10⁻¹³ |
| Dynamic Friction Coefficient [-] | 1.3 | 1.0 | 1.1 | 1.0 | 1.1 |
| Condition of Inner Face of Vulcanized Tire | ○ | ○ | ○ | ○ | ○ |

**[Table 3]**

| | Comparative Example 4 | Example 9 |
|---|---|---|
| Three-layered Film | Yes | Yes |
| Application of Mold Release Agent | No | No |
| Added Lubricant (TPU Layer) | Pentaerythritol Tetrastearate (manufactured by Kao Corporation) | Olcic acid Amaido (manufactured by Lion Akzo Co., Ltd) |
| Molecular Weight of Lubricant | 1174 | 283 |
| Oxygen Permeability of Three-layered Film [cm³ • cm/cm² • sec • cmHg] | 10.0x10⁻¹³ | 10.0x10⁻¹³ |
| Dynamic Friction Coefficient [-] | 2.8 | 1.7 |
| Condition of Inner Face of Vulcanized Tire | × | ○ |

Comparative examples 1, 2 in Table 1 show that the inner liner for conventional pneumatic tires will be damaged without application of the mold release agent at the time of manufacturing. On the other hand, Examples 1-9 in Tables 1-3 according to the present invention show that the inner liner will not be damaged without application of the mold release agent at the time of manufacturing.

### REFERENCE SIGNS LIST

- 1: tread
- 2: bead
- 3: side wall
- 4: carcass
- 5: belt
- 6: inner liner
- 11: upper mold
- 12: unvulcanized tire
- 13: lower mold
- 14: bladder
- 15: cylinder
- 16: rod
- 17: vulcanized tire

## Claims

1. A pneumatic tire having an inner liner (6) including a film layer on an inner face of the pneumatic tire, wherein
the pneumatic tire is produced by a manufacturing method including a process to press an unvulcanized tire (12) against a mold (11,13) by use of a bladder (14) without applying a mold release agent,
the inner face of the pneumatic tire consists of the film layer,
the film layer has a multilayer structure obtainable by laminating a resin film or sheet and an auxiliary layer,
a surface of the film layer is composed of a thermoplastic urethane elastomer layer,
wherein the film layer includes a lubricant having a molecular weight of 1000 or less, and a dynamic friction coefficient between the film layer and a bladder (14) formed of a vulcanized and molded rubber composition in which butyl rubber 95 parts by mass, chloroprene rubber 5 parts by mass, carbon black 48 parts by mass, resin 5.5 parts by mass, castor oil 8 parts by mass, and zinc oxide 5 parts by mass are mixed is 2.0 or less at 25 degrees Celsius.

2. The pneumatic tire according to claim 1, wherein the lubricant is a fatty acid compound, hydrocarbon resin, paraffin, aliphatic amid, aliphatic ester, fatty acid metal salt, or a mixture thereof.

3. The pneumatic tire according to claim 1 or 2, wherein the film layer has a thermoplastic resin film.

4. The pneumatic tire according to any of claims 1 to 3, wherein oxygen permeability of the film layer is 3.0x10⁻¹²cm³ • cm/cm² • sec cmHg or less at 20 degrees Celsius and 65 % RH.

5. The pneumatic tire according to any of claims 1 to 4, wherein the film layer includes a layer made of a modified ethylene-vinyl alcohol copolymer derived from an ethylene-vinyl alcohol copolymer 100 parts by mass containing ethylene 25-50 mol % by reaction with an epoxy compound 1-50 parts by mass.

6. The pneumatic tire according to any of claims 1 to 4, wherein the film layer includes a layer made of a resin composition, in which soft resin or elastomer having Young's modulus 500 MPa or less at 23 degrees Celsius is dispersed in a matrix of a modified ethylene-vinyl alcohol copolymer derived from an ethylene-vinyl alcohol copolymer 100 parts by mass containing ethylene 25-50 mol % by reaction with the epoxy compound 1-50 parts by mass, and
the resin composition contains soft resin or elastomer 10-80 mass %.

7. The pneumatic tire according to any of claims 1 to 6, wherein the film layer is crosslinked.

8. The pneumatic tire according to any of claims 1 to 7, wherein the inner liner (6) is a laminate including the film layer and a rubbery elastic layer, and
the rubbery elastic layer is made of butyl rubber or halogenated butyl rubber.

9. The pneumatic tire according to claim 8, wherein the film layer and the rubbery elastic layer are adhered to one another via an adhesive layer made of an adhesive composition.

10. A method of manufacturing a pneumatic tire including a process to place an unvulcanized tire (12) having an inner liner (6) including a film layer disposed on an inner face of the unvulcanized tire (12), in a mold (11,13), a process to place a bladder (14) inside the unvulcanized tire (12), and a process to vulcanize and mold the unvulcanized tire (12) by inflating the bladder (14) such that the unvulcanized tire (12) is pressed against the mold (11,13) via the inner liner (6), wherein
the inner face of the unvulcanized tire (12) consists of the film layer,
the film layer has a multilayer structure obtainable by laminating a resin film or sheet and an auxiliary layer,
a surface of the film layer is composed of a thermoplastic urethane elastomer layer,
the film layer includes a lubricant having a molecular weight of 1000 or less,
a dynamic friction coefficient between the film layer and the bladder (14) is 2.0 or less at 25 degrees Celsius, and
a mold release agent is not used in vulcanizing and molding.

11. The method according to claim 10, wherein the lubricant is a fatty acid compound, hydrocarbon resin, paraffin, aliphatic amid, aliphatic ester, fatty acid metal salt, or a mixture thereof.

12. The method according to claim 10 or 11, wherein the film layer has a thermoplastic resin film.

## Patentansprüche

1. Luftreifen, der eine Innenauskleidung (6) aufweist, die eine Folienschicht auf einer Innenseite des Luftreifens umfasst, wobei
der Luftreifen durch eine Herstellungsmethode hergestellt wird, die ein Verfahren zum Drücken eines unvulkanisierten Reifens (12) gegen eine Form (11,13) durch Verwendung einer Blase (14) ohne Aufbringen eines Formtrennmittels umfasst,
die Innenseite des Luftreifens aus der Folienschicht besteht,
die Folienschicht eine Mehrschichtstruktur aufweist, die durch Laminieren einer Harzfolie oder -platte und einer Hilfsschicht erhältlich ist,
eine Oberfläche der Folienschicht aus einer thermoplastischen Urethanelastomerschicht besteht,
wobei die Folienschicht ein Gleitmittel umfasst, das ein Molekulargewicht von 1000 oder weniger aufweist, und ein dynamischer Reibungskoeffizient zwischen der Folienschicht und einer Blase (14), die aus einer vulkanisierten und geformten Kautschukzusammensetzung gebildet ist, in der 95 Masseteile Butylkautschuk, 5 Masseteile Chloroprenkautschuk, 48 Masseteile Ruß, 5,5 Masseteile Harz, 8 Masseteile Rizinusöl und 5 Masseteile Zinkoxid gemischt sind, 2,0 oder weniger bei 25 Grad Celsius beträgt.

2. Luftreifen nach Anspruch 1, wobei das Gleitmittel eine Fettsäureverbindung, ein Kohlenwasserstoffharz, Paraffin, aliphatisches Amid, aliphatischer Ester, Fettsäuremetallsalz oder eine Mischung davon ist.

3. Luftreifen nach Anspruch 1 oder 2, wobei die Folienschicht eine thermoplastische Harzfolie aufweist.

4. Luftreifen nach einem der Ansprüche 1 bis 3, wobei die Sauerstoffdurchlässigkeit der Folienschicht 3,0 x 10⁻¹² cm³·cm/cm²·sec·cmHg oder weniger bei 20 Grad Celsius und 65 % RF beträgt.

5. Luftreifen nach einem der Ansprüche 1 bis 4, wobei die Folienschicht eine Schicht umfasst, die aus einem modifizierten Ethylen-Vinylalkohol-Copolymer, das von einem Ethylen-Vinylalkohol-Copolymer von 100 Masseteilen abgeleitet ist, das 25 - 50 Mol.% Ethylen enthält, durch Reaktion mit einer Epoxyverbindung von 1 - 50 Masseteilen hergestellt wird.

6. Luftreifen nach einem der Ansprüche 1 bis 4, wobei die Folienschicht eine Schicht umfasst, die aus einer Harzzusammensetzung hergestellt wird, wobei weiches Harz oder Elastomer, das ein Young'sches Modul von 500 MPa oder weniger bei 23 Grad Celsius aufweist, in einer Matrix eines modifizierten Ethylen-Vinylalkohol-Copolymers, das von einem Ethylen-Vinylalkohol-Copolymer von 100 Masseteilen abgeleitet ist, das 25 - 50 Mol-% Ethylen enthält, durch Reaktion mit der Epoxyverbindung von 1 - 50 Masseteilen dispergiert wird und
die Harzzusammensetzung weiches Harz oder Elastomer von 10 - 80 Masse-% enthält.

7. Luftreifen nach einem der Ansprüche 1 bis 6, wobei die Folienschicht vernetzt wird.

8. Luftreifen nach einem der Ansprüche 1 bis 7, wobei die Innenauskleidung (6) ein Laminat ist, das die Folienschicht und eine kautschukartige elastische Schicht umfasst und
die kautschukartige elastische Schicht aus Butylkautschuk oder halogeniertem Butylkautschuk hergestellt wird.

9. Luftreifen nach Anspruch 8, wobei die Folienschicht und die kautschukartige elastische Schicht aneinander durch eine Klebstoffschicht, die aus einer Klebstoffzusammensetzung hergestellt wird, befestigt werden.

10. Methode für die Herstellung eines Luftreifens, die Folgendes umfasst: ein Verfahren zum Positionieren eines unvulkanisierten Reifens (12), der eine Innenauskleidung (6) aufweist, die eine Folienschicht umfasst, die sich auf einer Innenseite des unvulkanisierten Reifens (12) befindet, in eine Form (11,13), ein Verfahren zum Positionieren einer Blase (14) in den unvulkanisierten Reifen (12) und ein Verfahren zum Vulkanisieren und Formen des unvulkanisierten Reifens (12) durch Aufblasen der Blase (14) derart, dass der unvulkanisierte Reifen (12) über die Innenauskleidung (6) gegen die Form (11,13) gepresst wird, wobei
die Innenseite des unvulkanisierten Reifens (12) aus der Folienschicht besteht,
die Folienschicht eine Mehrschichtstruktur aufweist, die durch Laminieren einer Harzfolie oder -platte und einer Hilfsschicht erhältlich ist,
eine Oberfläche der Folienschicht aus einer thermoplastischen Urethanelastomerschicht besteht,
wobei die Folienschicht ein Gleitmittel umfasst, das ein Molekulargewicht von 1000 oder weniger aufweist,
ein dynamischer Reibungskoeffizient zwischen der Folienschicht und der Blase (14) 2,0 oder weniger bei 25 Grad Celsius beträgt und
kein Formtrennmittel beim Vulkanisieren und Formen verwendet wird.

11. Verfahren nach Anspruch 10, wobei das Gleitmittel eine Fettsäureverbindung, ein Kohlenwasserstoffharz, Paraffin, aliphatisches Amid, aliphatischer Ester, Fettsäuremetallsalz oder eine Mischung davon ist.

12. Verfahren nach Anspruch 10 oder 11, wobei die Folienschicht eine thermoplastische Harzfolie aufweist.

## Revendications

1. Pneumatique présentant une doublure intérieure (6) comportant une couche pelliculée sur une face intérieure du pneumatique, dans lequel
le pneumatique est produit selon un procédé de fabrication comportant une opération de compression d'un pneumatique non vulcanisé (12) contre un moule (11, 13) au moyen d'une vessie (14) sans application d'agent de démoulage,
la face intérieure du pneumatique consiste en ladite couche pelliculée, et
la couche pelliculée présente une structure multicouche résultant de la stratification d'une pellicule ou feuille de résine et d'une couche auxiliaire,
une surface de la couche pelliculée se compose d'une couche élastomère thermoplastique à base d'uréthanne,
dans lequel la couche pelliculée comporte un lubrifiant présentant un poids moléculaire de 1000 ou moins, et le coefficient de frottement dynamique entre la couche pelliculée et une vessie (14), réalisée dans une composition de caoutchouc vulcanisée et moulée dans laquelle du caoutchouc butylique, 95 parties en masse, du caoutchouc au chloroprène, 5 parties en masse, du noir de carbone, 48 parties en masse, de la résine, 5,5 parties en masse, de l'huile de ricin, 8 parties en masse, et de l'oxyde de zinc, 5 parties en masse, sont mélangés, est de 2,0 ou moins à 25 degrés Celsius.

2. Pneumatique selon la revendication 1, dans lequel le lubrifiant est un composé à base d'acide gras, une résine hydrocarbure, la paraffine, un amide aliphatique, un ester aliphatique, un sel métallique d'acide gras, ou un mélange de ceux-ci.

3. Pneumatique selon la revendication 1 ou 2, dans lequel la couche pelliculée présente une pellicule de résine thermoplastique.

4. Pneumatique selon l'une quelconque des revendications 1 à 3, dans lequel la perméabilité à l'oxygène de la couche pelliculée est de 3,0 x 10⁻¹² cm³ • cm/cm² • s cmHg ou moins à 20 degrés Celsius et 65 % HR.

5. Pneumatique selon l'une quelconque des revendications 1 à 4, dans lequel la couche pelliculée comporte une couche constituée d'un copolymère d'éthylène-alcool vinylique modifié dérivé d'un copolymère d'éthylène-alcool vinylique, 100 parties en masse, contenant de l'éthylène, 25-50 % molaire, ayant réagi avec un composé époxy, 1-50 parties en masse.

6. Pneumatique selon l'une quelconque des revendications 1 à 4, dans lequel la couche pelliculée comporte une couche constituée d'une composition de résine, dans laquelle de la résine souple ou un élastomère présentant un module d'élasticité de Young de 500 MPa ou moins à 23 degrés Celsius est dispersé(e) dans une matrice de copolymère d'éthylène-alcool vinylique modifié dérivé d'un copolymère d'éthylène-alcool vinylique, 100 parties en masse, contenant de l'éthylène, 25-50 % molaire, ayant réagi avec un composé époxy, 1-50 parties en masse, et
la composition de résine contient de la résine souple ou un élastomère, 10-80 % en masse.

7. Pneumatique selon l'une quelconque des revendications 1 à 6, dans lequel la couche pelliculée est réticulée.

8. Pneumatique selon l'une quelconque des revendications 1 à 7, dans lequel la doublure intérieure est un stratifié comportant la couche pelliculée et une couche élastique caoutchouteuse, et
la couche élastique caoutchouteuse est constituée de caoutchouc butylique ou de caoutchouc butylique halogéné.

9. Pneumatique selon la revendication 8, dans lequel la couche pelliculée et la couche élastique caoutchouteuse adhèrent l'une à l'autre au moyen d'une couche adhésive constituée d'une composition adhésive.

10. Procédé de fabrication d'un pneumatique comportant une opération consistant à placer dans un moule (11, 13) un pneumatique non vulcanisé (12) présentant une doublure intérieure (6) comportant une couche pelliculée disposée sur une face intérieure du pneumatique non vulcanisé (12), une opération consistant à placer une vessie (14) à l'intérieur du pneumatique non vulcanisé (12), et une opération consistant à vulcaniser et mouler le pneumatique non vulcanisé (12) en gonflant la vessie (14) de manière que le pneumatique non vulcanisé (12) soit comprimé contre le moule (11, 13) par l'intermédiaire de la doublure intérieure (6), dans lequel
la face intérieure du pneumatique non vulcanisé (12) consiste en ladite couche pelliculée,
la couche pelliculée présente une structure multicouche résultant de la stratification d'une pellicule ou feuille de résine et d'une couche auxiliaire,
une surface de la couche pelliculée se compose d'une couche élastomère thermoplastique à base d'uréthanne,
la couche pelliculée comporte un lubrifiant présentant un poids moléculaire de 1000 ou moins,
le coefficient de frottement dynamique entre la couche pelliculée et la vessie (14) est de 2,0 ou moins à 25 degrés Celsius, et
aucun agent de démoulage n'est employé lors de la vulcanisation et du moulage.

11. Procédé selon la revendication 10, dans lequel le lubrifiant est un composé à base d'acide gras, une résine hydrocarbure, la paraffine, un amide aliphatique, un ester aliphatique, un sel métallique d'acide gras, ou un mélange de ceux-ci.

12. Procédé selon la revendication 10 ou 11, dans lequel la couche pelliculée présente une pellicule de résine thermoplastique.
